# EUROPEAN PATENT SPECIFICATION

(11) **EP 4 430 003 B1**
(45) Date of publication and mention of the grant of the patent: **04.02.2026**
(21) Application number: 22813413.6
(22) Date of filing: 02.11.2022
(51) Int. Cl.: C01C 1/04, C25B 1/04, F04D 29/10, F16J 15/40, F25J 3/04

(54) **SYSTEM FOR AMMONIA PRODUCTION INCLUDING HYDROGEN LEAK RECOVERY FROM DRY GAS SEALS OF HYDROGEN COMPRESSOR, AND METHOD**
SYSTEM ZUR AMMONIAKHERSTELLUNG MIT WASSERSTOFFLECKRÜCKGEWINNUNG AUS TROCKENGASDICHTUNGEN EINES WASSERSTOFFKOMPRESSORS UND VERFAHREN
SYSTÈME DE PRODUCTION D'AMMONIAC COMPRENANT UNE RÉCUPÉRATION DE FUITE D'HYDROGÈNE À PARTIR DE GARNITURES SÈCHES D'UN COMPRESSEUR D'HYDROGÈNE, ET MÉTHODE

(30) Priority: 08.11.2021 IT 202100028343
(43) Date of publication of application: 18.09.2024
(73) Proprietor: NUOVO PIGNONE TECNOLOGIE - S.R.L., 50127 Florence (IT)
(72) Inventor: GUGLIELMO, Alberto, 50127 Florence (IT); MATINA, Dario, 50127 Florence (IT); GRIMALDI, Angelo, 50127 Florence (IT); MASI, Guido, 50127 Florence (IT); MEAZZINI, Giulia, 50127 Florence (IT)
(74) Representative: Novagraaf Group
(86) International application number: PCT/EP2022/025493
(87) International publication number: WO 2023/078584

(56) References cited:
- EP-A1- 3 816 452
- CN-Y- 201 433 872
- KR-B1- 102 257 467
- US-A1- 2011 243 828

## Description

### TECHNICAL FIELD

The present disclosure concerns systems and methods for the production of ammonia.

### BACKGROUND ART

EP 3 816 452 A1 discloses an ammonia plant synthesis gas compressor train. KR 102 257 467 B1 discloses a platform and method for producing ammonia. US 2011/243828 A1 discloses the production of ammonia from air and water. CN 201 433 872 Y discloses a dry gas seal for an ammonia compressor. Ammonia (NH₃) is a gas with a high solubility in water, which is often used in an aqueous solution. Ammonia is used in several industrial applications, among others for the production of nitric acid, urea and other ammonia salts, such as nitrates, phosphates, and the like. Ammonia derivatives are widely used in agriculture. Around 80% of the ammonia production is used for the manufacturing of fertilizers.

Commonly, ammonia is produced by synthesis of nitrogen and hydrogen according to the following exothermic reaction (i.e. a reaction which releases heat):

N₂ + 3H₂ ↔ 2NH₃ + ΔH

wherein ΔH is heat released by the reaction.

According to a widely used method, ammonia production usually starts from a feed gas, which provides a source of hydrogen, such as methane, for instance. Nitrogen is obtained from air.

Alternative methods for ammonia synthesis use hydrogen obtained by electrolysis. Recently, in an attempt to reduce production of greenhouse gases and avoid use of hydrocarbons, so-called green ammonia production processes and systems have been intensively investigated. One way of producing green ammonia is by using hydrogen from water electrolysis, powered by renewable energy resources, and nitrogen separated from air. Nitrogen and hydrogen are then fed into a Haber process (also known as Haber-Bosch process) where hydrogen and nitrogen are reacted together at high temperatures and pressures to produce ammonia.

While the Haber process is usually conducted under high-pressure and high-temperature conditions, which in turn require high energy, more recently synthesis processes under lower temperature conditions have been investigated, using suitable catalysts promoting the synthesis reaction.

Nevertheless, hydrogen and nitrogen used for ammonia synthesis need to be compressed at relatively high pressure values, e.g. around 30 bar. Usually, dynamic compressors, and specifically centrifugal compressors are used for such purpose.

It is highly desirable to reduce or prevent hydrogen leakages from hydrogen compressors. For that purpose, dry gas seals have been taken into consideration as most promising sealing members around rotary shafts of hydrogen compressors.

Dry gas seals have become increasingly popular as non-contact seals to efficiently reduce leakages of process gas from centrifugal compressors or other tur-bomachines (see Stahley, John S. "Dry Gas Seals Handbook", Copyright 2005 by PennWell Corporation, ISBN 1-59370-062-8). Dry gas seals use a flow of process gas to provide efficient non-contact sealing between a rotary shaft and a stationary seal. Dry gas seals require a flow of clean, dry gas to operate. Usually, the same gas processed by the compressor ("process gas") is used as seal gas. Seal gas is taken from the delivery side of the compressor and the compressor shall be operative to provide sufficiently pressurized seal gas.

Moreover, dry gas seals require a flow of separation gas, which prevents the seal gas from contacting the bearings that support the rotary shaft and that are arranged outboard of the dry gas seal. For that purpose, a barrier seal is arranged between the dry gas seal and the bearing. An amorphous gas, such as nitrogen, is injected into the barrier seal.

In short, seal gas is injected into the dry gas seal between a high-pressure region and a low-pressure region. A fraction of seal gas flows towards the high-pressure region through an inner labyrinth seal arranged between the dry gas seal and the high-pressure region of the turbomachine. Another fraction of seal gas flows towards the low-pressure region. A fraction of the separation gas flows towards the bearing and a fraction of the separation gas flows towards the dry gas seal.

Seal gas and separation gas leaking from the dry gas seal and bearing arrangement are vented through a vent. In some embodiments, the dry gas seal includes only a primary gas seal and a single vent. In more performing dry gas seals, referred to as tandem dry gas seals, the dry gas seal includes a primary gas seal and as secondary gas seal. Tandem dry gas seals include a primary vent and a secondary vent, through which seal gas and separation gas are vented.

When used in an ammonia synthesis system, dry gas seals in a hydrogen compressor become a major source of hydrogen dispersion.

It would be desirable to provide efficient hydrogen compressor sealing in ammonia synthesis plants, specifically in green ammonia synthesis plants and systems.

### SUMMARY

The present invention is defined in the accompanying claims. According to embodiments disclosed herein, an ammonia synthesis system includes a hydrogen source, for instance an electrolyzer, and a nitrogen source, for instance a nitrogen separator, adapted to separate nitrogen from compressed air. The hydrogen is processed in a hydrogen compressor. Compressed hydrogen and compressed nitrogen are delivered to a syngas compressor for further pressure boosting to the final pressure required for the synthesis of ammonia. Hydrogen is used as seal gas and nitrogen is used as separation gas in dry gas seals of the hydrogen compressor. Seal gas and separation gas venting from the dry gas seals are collected and delivered to the syngas compressor, to avoid hydrogen losses.

### BRIEF DESCRIPTION OF THE DRAWINGS

Reference is now made briefly to the accompanying drawings, in which:
Fig.1 illustrates a schematic of a system according to the present disclosure in an embodiment;
Fig.2 illustrates a schematic of a system according to the present disclosure in another embodiment; and
Fig.3 illustrates a flow chart summarizing a method according to the present disclosure,

### DETAILED DESCRIPTION

In short, disclosed herein are novel ammonia synthesis plants wherein compressed hydrogen and nitrogen are delivered to the dry gas seals of a hydrogen compressor as seal gas and separation gas, respectively. Seal gas and separation gas leaking through the vents of the dry gas seals are collected and delivered to the syngas compressor of an ammonia synthesis unit, to be processed along with a flow of nitrogen from a nitrogen source, such as a nitrogen separation unit, and the main hydrogen flow delivered by the hydrogen compressor. No hydrogen leakage is burnt in a flare or dispersed in the environment.

In the present disclosure and annexed claims, the term "dry gas seal" can be any seal, which uses seal gas and separation gas to prevent gas leakages along a rotary shaft.

More specifically, according to an aspect, disclosed herein is a system for ammonia production through synthesis of hydrogen and nitrogen. The system includes a hydrogen source and a nitrogen source. The system further comprises a hydrogen compression unit. The hydrogen compression unit includes a suction side fluidly coupled to the hydrogen source and a delivery side. The compression unit may include one or more compressors, for instance compressors arranged in series. Each compressor can be a dynamic compressor, such as a centrifugal compressor. In embodiments disclosed herein, each compressor can be a multi-stage compressor. At least one compressor of the hydrogen compression unit comprises a casing and rotary shaft housed for rotation in the casing. The compressor includes at least one dry gas seal, which provides rotary seal around the rotary shaft. Usually, the compressor includes two dry gas seals, at opposite ends of the rotary shaft.

The system further includes an ammonia synthesis unit fluidly coupled to the hydrogen compression unit and to the nitrogen source. Nitrogen and hydrogen delivered to the ammonia synthesis unit can be blended and further compressed in a syngas compressor, and finally delivered to an ammonia synthesis module.

A seal gas feed line is adapted to deliver compressed hydrogen to the dry gas seal(s) of the hydrogen compression unit and a separation gas feed line is adapted to deliver nitrogen to the dry gas seal(s).

The ammonia synthesis unit is fluidly coupled to a vent, or to a primary vent and a secondary vent, of the dry gas seal(s), and adapted to receive and process compressed hydrogen from the hydrogen compression unit, nitrogen from the nitrogen source and gas venting from the dry gas seal(s), wherein the vented gas usually contains a blend of hydrogen and nitrogen.

Full hydrogen recovery is thus achieved.

According to a further aspect, disclosed herein is a method for ammonia production. According to embodiments disclosed herein, the method comprises the following steps:
compressing hydrogen in a hydrogen compression unit;
delivering compressed hydrogen as seal gas to at least one dry gas seal of the hydrogen compression unit, and preferably to each dry gas seal of the hydrogen compression unit;
delivering nitrogen from a nitrogen source to the dry gas seal as separation gas for the dry gas seal;
collecting a gaseous mixture venting from the dry gas seal, the gaseous mixture containing hydrogen and nitrogen; and
delivering compressed hydrogen from the hydrogen compression unit, nitrogen from the nitrogen source, and the vented gaseous mixture from the dry gas seal(s) to the ammonia synthesis unit and synthesizing ammonia therefrom.

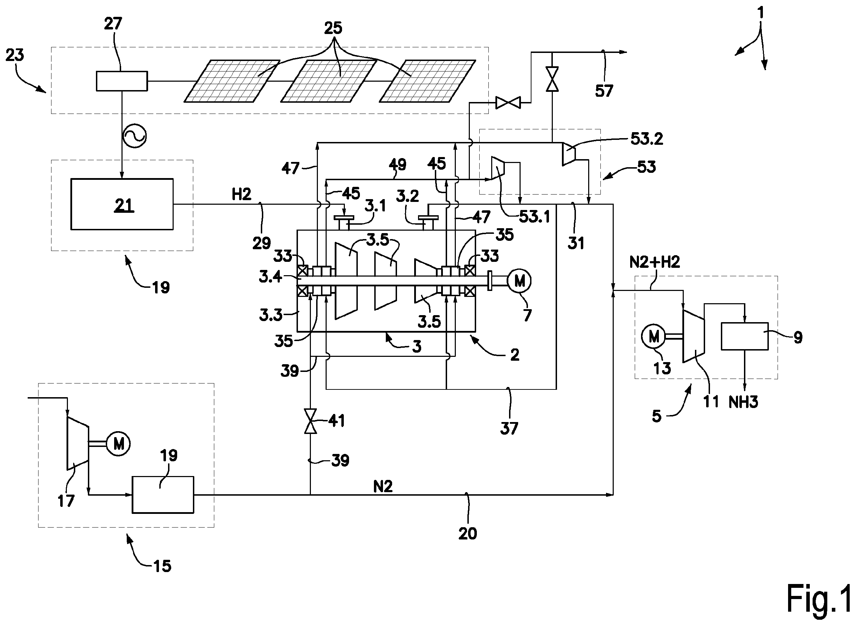

Referring now to the drawings, an embodiment of a system according to the present disclosure is illustrated in Fig. 1. The system 1 includes a hydrogen compression unit 2. In the embodiment of Fig. 1, the hydrogen compression unit 2 is schematically represented as a dynamic hydrogen compressor, in particular a centrifugal hydrogen compressor 3. It shall be understood that the hydrogen compression unit 2 may in actual fact include a plurality of compressors arranged in series, to achieve the required compression ratio and thus a hydrogen pressure, which may be as high as 30 bar, for instance. The plurality of compressors forming the hydrogen compression unit 2 may be arranged along a single shaft line and form a compressor train, driven by a driver 7. In other arrangements, the compressors may be arranged along two or more shaft lines, which may rotate at different rotational speeds.

In the embodiment of Fig.1, the system 1 further includes an ammonia synthesis unit 5, comprising an ammonia synthesis module 9, a syngas compressor 11 and a driver 13 drivingly connected to the syngas compressor 11. The syngas compressor 11 may in turn include one or more syngas compressors or compressor stages in series.

The system 1 further includes a nitrogen source 15. The nitrogen source 15 can include an air compressor 17 and a nitrogen separator 19. The nitrogen separator 19 may include, for instance, a membrane separator, a fractioning system, or any other device adapted to separate nitrogen from the other air components, specifically oxygen and carbon dioxide. The nitrogen separator 19 is fluidly coupled to a suction side 11.1 of the syngas compressor 11 through a nitrogen line 20.

The syngas compressor 11 of the ammonia synthesis unit 5 processes a blend of nitrogen and hydrogen, referred to as syngas, which is delivered to the ammonia synthesis module 9 at the required pressure for the synthesis process to be performed.

The hydrogen compression unit 2 is fluidly coupled to a hydrogen source 19. In the embodiment of Fig.1, the hydrogen source 19 includes an electrolyzer 21, which produces hydrogen from water using electric power.

The electric power required by the electrolyzer 21 can be generated by any electric power source. In currently preferred embodiments, the electric power source includes a power converting unit 23, adapted to convert power from a renewable energy resource into electric power. In the schematic of Fig.1, the power converting unit 23 includes photovoltaic panels 25 and an inverter 27, to convert solar energy into electric energy. In other embodiments, not shown, other renewable energy resources can be used instead of, or in addition to, solar energy. For instance wind energy, geothermal energy, wave and tidal stream energy, or the like can be used as renewable energy resources.

Hydrogen produced by the electrolyzer 21 is delivered to a suction side 3.1 of the hydrogen compressor 3 of the hydrogen compression unit 2 through a hydrogen suction line 29.

The hydrogen compressor 3 of the hydrogen compression unit 2 includes a delivery side 3.2, which can be fluidly coupled to the suction side 11.1 of the syngas compressor 11. Reference number 31 indicates the line connecting the hydrogen compressor 3 to the syngas compressor 11.

The hydrogen compressor 3 comprises a casing 3.3 and a rotary shaft 3.4 housed for rotation in the casing 3.3. The rotary shaft 3.4 rotates integrally with one or more impellers 3.5. The rotary shaft 3.4 is supported in the casing 3.3 by means of bearings 33. Inboard each bearing 33 the hydrogen compressor 3 comprises a respective dry gas seal 35. Each dry gas seal 35 separates a low-pressure region and a high-pressure region in the casing 3.3. The low-pressure region is outboard the dry gas seal 35 and includes the respective bearing 33. The high-pressure region is inboard the dry gas seal 35 and includes the interior of the casing 3.3, where the rotary impellers 3.5 are arranged, or part thereof.

Each dry gas seal 35 is fluidly coupled to a seal gas feed line 37, adapted to feed compressed hydrogen, e.g. diverted from the delivery side of the hydrogen compressor 3, as seal gas to each dry gas seal 35. In the embodiment of Fig.1, the seal gas feed line 37 is fluidly coupled to the delivery side 3.2 of the hydrogen compressor 3.

Each dry gas seal 35 is further fluidly coupled to a separation gas feed line 39. In the embodiment of Fig.1, the separation gas feed line 39 is fluidly coupled to the nitrogen line 20. The separation gas feed line 39 includes a pressure reduction device 41, for instance a lamination valve or a throttle valve, or an expander. With this arrangement, nitrogen from the nitrogen source 15 can be delivered as separation gas at a suitable pressure to each dry gas seal 35.

Each dry gas seal 35 can be a single dry gas seal or a tandem dry gas seal, for instance. In the first case, each dry gas seal 35 will have a single vent, wherefrom a blend of separation gas and seal gas leaking from the dry gas seal is vented. In the embodiment of Fig. 1, each dry gas seal 35 is a tandem dry gas seal and includes a primary gas seal and a second gas seal. The primary gas seal is arranged inboard the secondary gas seal. Each primary gas seal includes a primary vent 45 and each secondary gas seal includes a secondary vent 47. Seal gas (hydrogen) leaks through the primary vent 45, while a blend of seal gas (hydrogen) and separation gas (nitrogen) leaks through the secondary vent 47 of each dry gas seal 35.

To reduce or prevent hydrogen losses, both the primary vents 45 and the secondary vents 47 are fluidly coupled to the ammonia synthesis unit 5 to recover hydrogen leaking from the dry gas seals 35. More specifically, hydrogen leaking from the primary vents 45 is collected by a primary vent recovery line 49 and the nitrogen/hydrogen blend leaking from the secondary vents 47 is collected by a secondary vent recovery line 51.

In some embodiments, since gas leaking through the primary vents 45 and secondary vents 47 is at a pressure lower than the suction pressure of the syngas compressor 11, a pressure boosting unit 53 is used, for boosting the pressure of the gas leakages from both the primary vents 45 and the secondary vents 47 to the suction pressure of the syngas compressor 11, which is substantially the same as the delivery pressure of the hydrogen compressor 3 and the pressure of the nitrogen delivered by the nitrogen source 15.

In general, the pressure of the primary vent is higher than the pressure of the secondary vent. Thus, the pressure boosting unit 53 may include different pressure boosting devices 53.1 and 53.2, for the gas leaking from the primary vents 45 and from the secondary vents 47, respectively. Each pressure boosting device can include a compressor, for instance a compressor having a low-flowrate and high compression ratio, such as a reciprocating compressor. In other embodiments, ejectors can be used to boost the pressure of the gas leaking from the dry gas seals.

Since the syngas compressor 11 processes a blend of hydrogen and nitrogen to be delivered to the ammonia synthesis module 9, separation of nitrogen and hydrogen in the leakage blend venting from the dry gas seals is not required. The entire gas vented from the dry gas seals of the hydrogen compression unit 2 can be therefore recovered and processed in the ammonia synthesis unit 5. No hydrogen is flared, unless required, e.g., in case of unavailability of the syngas compressor 11. In this latter case, leakages from the dry gas seals 35 can be partly or fully flared through a duct 57.

In operation, the electrolyzer 21 powered by the power converting unit 23 produces hydrogen from water and the nitrogen separator 19 produces nitrogen by separation from compressed air. Hydrogen is compressed in the hydrogen compression unit 2 until reaching the pressure of nitrogen delivered by the nitrogen source 15. Pressurized hydrogen and nitrogen are mixed and processed through the syngas compressor 11 till reaching the final pressure required for ammonia synthesis in the ammonia synthesis module 9.

A small hydrogen flowrate is diverted from the hydrogen line 31 and fed as seal gas at proper pressure to the dry gas seals 35 of the hydrogen compression unit 2. A small flowrate of de-compressed nitrogen from the nitrogen line 20 is delivered as separation gas to the dry gas seals 35 and bearings 33 of the hydrogen compression unit 2.

Hydrogen and nitrogen venting from the dry gas seals 35 are collected and pressurized to the suction pressure of the syngas compressor 11 and fed to the syngas suction side, along with compressed hydrogen delivered by the hydrogen compression unit 2 and with nitrogen from the nitrogen source 15.

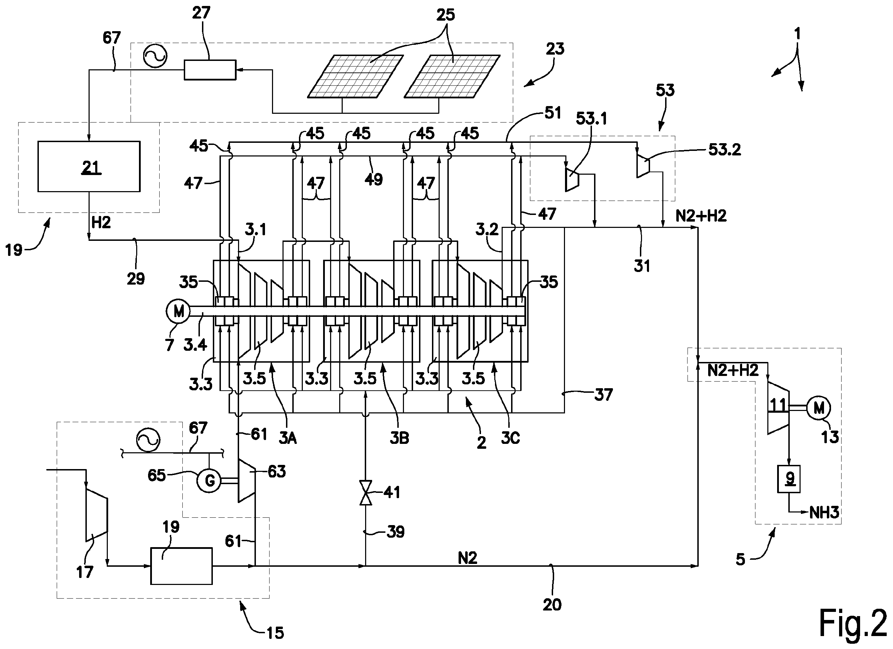

With continuing reference to Fig.1, a further embodiment of a system 1 for the production of ammonia according to the present disclosure is illustrated in Fig.2. The same reference numbers used in Fig.2 designate the same or equivalent components as in Fig.1, which will not be described in detail again.

In the embodiment of Fig.2, the hydrogen compression unit 2 comprises three compressors 3A, 3B, 3C arranged in sequence. The first compressor 3A is a low-pressure compressor, the second compressor 3B is a medium-pressure compressor and the third compressor 3C is a high-pressure compressor. In the embodiment of Fig.2, the three compressors 3A, 3B, 3C are arranged along a common shaft line including a common shaft, again labeled 3.4. Each compressor 3A, 3B, 3C is substantially configured as the compressor 3 described in relation to Fig.1, and includes a casing 3.3, a suction side 3.1, a delivery side 3.2, bearings (not shown in Fig.2) supporting the rotary shaft 3.4 and dry gas seals 35 providing a rotary seal around the rotary shaft 3.4.

Hydrogen produced by the electrolyzer 21 of the hydrogen source 19 is delivered to the suction side 3.1 of the most upstream compressor 3A and compressed hydrogen is delivered from the delivery side 3.2 of the most downstream compressor 3C to the syngas compressor 11. The delivery side of the low-pressure compressor 3A is fluidly coupled to the suction side of the medium-pressure compressor 3B. The delivery side of the medium-pressure compressor 3B is fluidly coupled to the suction side of the high-pressure compressor 3C.

Each compressor 3A, 3B, 3C includes bearings, which support the shaft 3.4. The bearings are usually arranged outboard the respective dry gas seals 35, in quite the same manner disclosed in connection with Fig.1 for the single hydrogen compressor 3.

In the exemplary embodiment of Fig.2, seal gas for each dry gas seal 35 is diverted from the delivery side 3.2 of the most downstream, high-pressure compressor 3C and delivered to each dry gas seal 35 through a seal gas feed line 37. Suitable pressure reducing devices can be foreseen to adjust the seal gas pressure at different pressure values for the different dry gas seals of the compressor train.

In other embodiments, not shown, seal gas for the dry gas seals 35 of each individual compressor 3A, 3B, 3C can be diverted from the delivery side of each compressor 3A, 3B, 3C separately. Intermediate solutions may also be envisaged, where seal gas is diverted from various points along the compression path, e.g. downstream of one or some of the intermediate compressors 3A, 3B and downstream the high-pressure compressor 3C.

Separation gas for each dry gas seal 35 can be fed by a separation gas feed line 39, which fluidly couples the nitrogen line 20 to the dry gas seals 35 of compressors 3A, 3B, 3C. A pressure reduction device 41 can be arranged along the separation gas feed line 39, if the nitrogen pressure has to be reduced prior to feeding the nitrogen from the nitrogen source 15 to the dry gas seals 35. Different pressure reduction devices can be used if it is desirable or useful to have separation gas at variable pressures for the different dry gas seals 35.

Hydrogen leaking from the primary vents 45 and nitrogen/hydrogen blend leaking from the secondary vents 47 is collected by the primary vent recovery line 49 and by the secondary vent recovery line 51, respectively, and delivered to the pressure boosting unit 53, quite in the same manner as described in connection with Fig.1. In the embodiment of Fig.2, the pressure boosting unit 53 includes two boosting devices 53.1 and 53.2 for the reasons explained in connection with Fig.1.

In some embodiments, the hydrogen compression unit 2 can be configured to compress a blend of hydrogen containing a certain molar percentage of nitrogen, for instance ranging between 2% and 20%, preferably between 5% and 15%. The molecular weight (Mw) of the gas blend processed by the hydrogen compression unit 2 is thus higher than the molecular weight of pure hydrogen and compression becomes less challenging. For instance, a lower rotary speed of the hydrogen compressors 3A, 3B, 3C can be used, the compression ratio being the same and/or a lower number of compression stages may be sufficient to achieve the same compression ratio.

Fig.2 illustrates an arrangement wherein an amount of nitrogen is blended with the hydrogen from the hydrogen source 21. The same arrangement can be used in the embodiment of Fig.1.

In Fig.2 a secondary nitrogen flow is diverted from the nitrogen line 20 and added to the hydrogen flow processed through the hydrogen compression unit 2. In the embodiment of Fig.2, the secondary nitrogen flow is added to the hydrogen flow at the suction side of the low-pressure compressor 3A or upstream thereof. In other embodiments, not shown, the secondary nitrogen flow can be injected into one of the intermediate compression stages between the suction side 3.1 of the low-pressure compressor 3A and the delivery side 3.2 of the high-pressure compressor 3C. In yet further embodiments, the secondary nitrogen flow can be split into two or more side-streams injected in different points, at different pressures along the flow path of the hydrogen between the suction side 3.1 and the delivery side 3.2.

Since nitrogen from the nitrogen source 15 is at a pressure higher than the hydrogen pressure upstream of the suction side 3.1, the secondary nitrogen flow must be depressurized. In the schematic of Fig.2, the secondary nitrogen flow is diverted from the nitrogen line 20 through a secondary nitrogen line 60, along which a depressurizing device 63 is arranged. The depressurizing device 63 can include a throttling or laminating valve. In other embodiments, as schematically shown in Fig.2, the depressurizing device 63 can include an expander. A combination of valves and expanders is not ruled out.

The expander 63 can be drivingly coupled to an electric generator 65, which converts at least part of the enthalpy drop of the nitrogen expanding in the expander 63 into useful electric power. The electric power generated by electric generator 65 can be delivered to an electric power distribution grid 67, which may be the same grid to which the inverter 27 is connected, or can be electrically coupled thereto. The electric power recovered from the nitrogen expansion can thus be used for electrolytic hydrogen production. In other embodiments, mechanical power generated by the expander 63 can be used to drive one or more of the compressors of the system 1, i.e. the expander 63 may be used as a helper of a compressor drive.

In the embodiment of Fig.2, similarly to the embodiment of Fig.1, the entire hydrogen leaking from all the dry gas seals of the hydrogen compressor or compressor train 3A, 3B, 3C is recovered and delivered to syngas compressor 11, where pressurized nitrogen and hydrogen are further pressurized and delivered to the ammonia synthesis module 9. Since a blend of nitrogen and hydrogen is processed in the syngas compressor 11 and used in the ammonia synthesis module 9, separation of nitrogen and hydrogen venting from the dry gas seals 35 is not required.

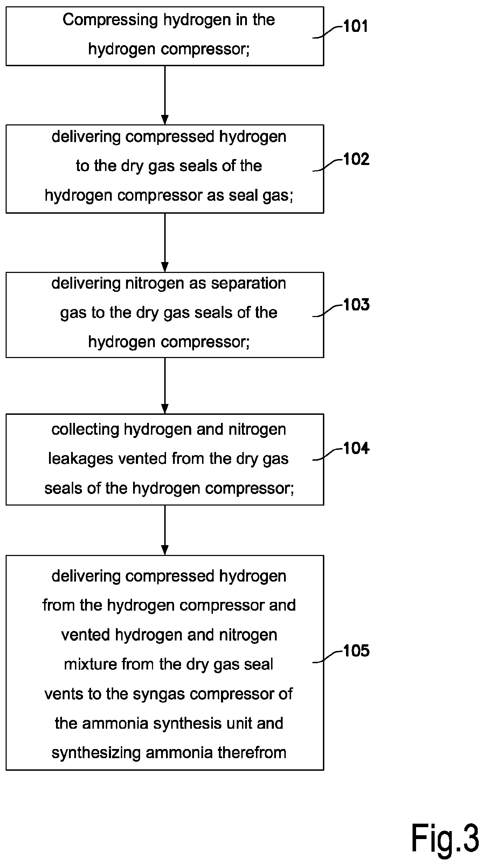

With continuing reference to Figs. 1 and 2, Fig.3 shows a flow chart summarizing the steps performed by the system 1. In step 101 hydrogen is compressed in the hydrogen compression unit 2. Compressed hydrogen is delivered to the dry gas seals 35 of the hydrogen compression unit 2 as seal gas (step 102). Nitrogen is further delivered as separation gas to the dry gas seals 35 of the hydrogen compression unit 2 (step 103). Hydrogen and nitrogen leaking from the primary and secondary vents of the dry gas seals 35 is collected (step 104) and delivered, along with compressed hydrogen from the hydrogen compression unit 2 and compressed nitrogen from the nitrogen source 15, to the syngas compressor 11 of the ammonia synthesis unit 9 to synthesize ammonia therefrom (step 105).

Certain exemplary embodiments have been described above to provide an overall understanding of the principles of the structure, function and use of the systems, devices and methods disclosed herein. One or more examples of these embodiments are illustrated in the accompanying drawings. Those skilled in the art will understand that the systems, devices and methods specifically described herein and illustrated in the accompanying drawings are non-limiting exemplary embodiments and that the scope of the present invention is defined solely by the claims. Features described or illustrated in connection with one exemplary embodiment may be combined with the features of other embodiments.

## Claims

1. A system (1) for the production of ammonia, the system comprising:
a hydrogen source (19);
a nitrogen source (15);
a hydrogen compression unit (2) comprising: a suction side (3.1) fluidly coupled to the hydrogen source (19), a delivery side (3.2), and at least one compressor (3; 3A, 3B, 3C); wherein the at least one compressor (3; 3A, 3B, 3C) comprises: a casing (3.3), a rotary shaft (3.4) housed for rotation in the casing (3.3), and at least one dry gas seal (35) sealingly surrounding the rotary shaft (3.4);
an ammonia synthesis unit (5) fluidly coupled to the hydrogen compression unit (2) and to the nitrogen source (19);
a seal gas feed line (37) adapted to deliver compressed hydrogen to the at least one dry gas seal (35); and
a separation gas feed line (20) adapted to deliver nitrogen to the at least one dry gas seal (35);
wherein the ammonia synthesis unit (5) is fluidly coupled to a vent (45, 47) of the at least one dry gas seal (35), and adapted to receive and process compressed hydrogen from the hydrogen compression unit (2), nitrogen from the nitrogen source (15) and gas venting from the at least one dry gas seal (35).

2. The system (1) of claim 1, wherein said vent comprises a primary vent (45) and a secondary vent (47), the primary vent (45) and the secondary vent (47) being fluidly coupled to the ammonia synthesis unit (5).

3. The system (1) of claim 1 or 2, wherein the hydrogen source (19) comprises an electrolyzer (21).

4. The system (1) of claim 3, further comprising a power converting unit (23), adapted to convert power from a renewable energy resource into electric power, and wherein the electrolyzer (21) is powered by the power converting unit (23).

5. The system (1) of one or more of the preceding claims, wherein the nitrogen source (15) comprises a nitrogen separation facility adapted to separate nitrogen from air.

6. The system (1) of one or more of the receding claims, wherein the ammonia synthesis unit (5) comprises a syngas compressor (11) fluidly coupled to the delivery side (3.2) of the hydrogen compression unit (2), to the nitrogen source (15) and to the vent (45, 47) of the at least one dry gas seal (35); and wherein the syngas compressor (11) is adapted to compress a gaseous blend containing nitrogen and hydrogen.

7. The system (1) of one or more of the preceding claims, further comprising a pressure boosting unit (53) adapted to boost pressure of gas venting from the vent (45, 47) of the at least one dry gas seal (35) to a gas inlet pressure of the ammonia synthesis unit (5).

8. The system (1) of claim 7, wherein the pressure boosting unit (53) is adapted to boost the pressure of gas venting from the vent (45, 47) of the at least one dry gas seal (35) to a delivery pressure of the hydrogen compression unit (2).

9. A method for producing ammonia, the method comprising:
compressing hydrogen in a hydrogen compression unit (2), the hydrogen compression unit (2) comprising: a suction side (3.1) fluidly coupled to a hydrogen source (19), a delivery side fluidly coupled to an ammonia synthesis unit (5), and at least one compressor (3; 3A, 3B, 3C); wherein the compressor comprises: a casing (3.3), a rotary shaft (3.4) housed for rotation in the casing (3.3), and at least one dry gas seal (35) sealingly surrounding the rotary shaft (3.4);
delivering compressed hydrogen to the at least one dry gas seal (35) as seal gas for the dry gas seal (35);
delivering nitrogen from a nitrogen source (15) to the at least one dry gas seal (35) as separation gas for the dry gas seal (35);
collecting a gaseous mixture venting from the at least one dry gas seal (35), the gaseous mixture containing hydrogen and nitrogen; and
delivering compressed hydrogen from the hydrogen compression unit (2), nitrogen from the nitrogen source (15), and the vented gaseous mixture to the ammonia synthesis unit (5) and synthesizing ammonia therefrom.

10. The method of claim 9, further comprising the step of boosting pressure of gas venting from the vent (45, 47) of the at least one dry gas seal (35) to a gas inlet pressure of the ammonia synthesis unit (5).

11. The method of claim 9 or 10, wherein nitrogen is blended with hydrogen in the hydrogen compression unit (2), such that a blend of hydrogen and nitrogen is processed through the hydrogen compression unit (2).

12. The method of claim 9 or 10 or 11, further comprising the step of producing hydrogen with an electrolyzer (21).

13. The method of claim 12, further comprising the following steps:
converting power from a renewable energy resource into electric power;
powering the electrolyzer (21) with said electric power.

14. The method of one or more of claims 9 to 13, further comprising the step of separating nitrogen from air.

15. The method of claim 14, further comprising the step of compressing hydrogen delivered by the hydrogen compression unit (2), vented gaseous mixture from the vent (45, 47) of the at last one dry gas seal (35) and nitrogen from a nitrogen source (15) in a syngas compressor (11) of the ammonia synthesis unit (5).

## Patentansprüche

1. System (1) für die Produktion von Ammoniak, das System umfassend:
eine Wasserstoffquelle (19);
eine Stickstoffquelle (15);
eine Wasserstoffkompressionseinheit (2), umfassend: eine Saugseite (3.1), die mit der Wasserstoffquelle (19) fluidisch gekoppelt ist, eine Abgabeseite (3.2), und mindestens einen Kompressor (3; 3A, 3B, 3C); wobei der mindestens eine Kompressor (3; 3A, 3B, 3C) umfasst: ein Gehäuse (3.3), eine Drehwelle (3.4), die für eine Drehung in dem Gehäuse (3.3) untergebracht ist, und mindestens eine Trockengasdichtung (35), die die Drehwelle (3.4) dichtend umgibt;
eine Ammoniaksyntheseeinheit (5), die mit der Wasserstoffkompressionseinheit (2) und mit der Stickstoffquelle (19) fluidisch gekoppelt ist;
eine Dichtgaszuführleitung (37), die angepasst ist, um komprimierten Wasserstoff an die mindestens eine Trockengasdichtung (35) abzugeben; und
eine Trenngaszuführleitung (20), die angepasst ist, um Stickstoff an die mindestens einen Trockengasdichtung (35) abzugeben;
wobei die Ammoniaksyntheseeinheit (5) mit einer Entlüftung (45, 47) der mindestens einen Trockengasdichtung (35) fluidisch gekoppelt ist und angepasst ist, um komprimierten Wasserstoff von der Wasserstoffkompressionseinheit (2), Stickstoff von der Stickstoffquelle (15) und Gas, das von der mindestens einen Trockengasdichtung (35) entlüftet wird, aufzunehmen und zu verarbeiten.

2. System (1) nach Anspruch 1, wobei die Entlüftung eine primäre Entlüftung (45) und eine sekundäre Entlüftung (47) umfasst, wobei die primäre Entlüftung (45) und die sekundäre Entlüftung (47) mit der Ammoniaksyntheseeinheit (5) fluidisch gekoppelt sind.

3. System (1) nach Anspruch 1 oder 2, wobei die Wasserstoffquelle (19) einen Elektrolyseur (21) umfasst.

4. System (1) nach Anspruch 3, ferner umfassend eine Leistungsumwandlungseinheit (23), die angepasst ist, um Leistung von einer erneuerbaren Energieressource in elektrische Leistung umzuwandeln, und wobei der Elektrolyseur (21) durch die Leistungsumwandlungseinheit (23) gespeist wird.

5. System (1) nach einem oder mehreren der vorstehenden Ansprüche, wobei die Stickstoffquelle (15) eine Stickstofftrennanlage, die angepasst ist, um Stickstoff aus Luft zu trennen, umfasst.

6. System (1) nach einem oder mehreren der vorstehenden Ansprüche, wobei die Ammoniaksyntheseeinheit (5) einen Synthesegaskompressor (11), der mit der Abgabeseite (3.2) der Wasserstoffkompressionseinheit (2), mit der Stickstoffquelle (15) und mit der Entlüftung (45, 47) der mindestens einen Trockengasdichtung (35) fluidisch gekoppelt ist, umfasst; und wobei der Synthesegaskompressor (11) angepasst ist, um ein gasförmiges Gemisch, das Stickstoff und Wasserstoff enthält, zu komprimieren.

7. System (1) nach einem oder mehreren der vorstehenden Ansprüche, ferner umfassend eine Druckerhöhungseinheit (53), die angepasst ist, um Druck von Gas, das von der Entlüftung (45, 47) der mindestens einen Trockengasdichtung (35) entlüftet wird, auf einen Gasansaugdruck der Ammoniaksyntheseeinheit (5) zu erhöhen.

8. System (1) nach Anspruch 7, wobei die Druckerhöhungseinheit (53) angepasst ist, um den Druck von Gas, das von der Entlüftung (45, 47) der mindestens einen Trockengasdichtung (35) entlüftet wird, auf einen Abgabedruck der Wasserstoffkompressionseinheit (2) zu erhöhen.

9. Verfahren zum Produzieren von Ammoniak, das Verfahren umfassend:
Komprimieren von Wasserstoff in einer Wasserstoffkompressionseinheit (2), die Wasserstoffkompressionseinheit (2), umfassend: eine Saugseite (3.1), die mit einer Wasserstoffquelle (19) fluidisch gekoppelt ist, eine Abgabeseite, die mit einer Ammoniaksyntheseeinheit (5) fluidisch gekoppelt ist, und mindestens einen Kompressor (3; 3A, 3B, 3C); wobei der der Kompressor umfasst: ein Gehäuse (3.3), eine Drehwelle (3.4), die für die Drehung in dem Gehäuse (3.3) untergebracht ist, und mindestens eine Trockengasdichtung (35), die die Drehwelle (3.4) dichtend umgibt;
Abgeben komprimierten Wasserstoffs an die mindestens eine Trockengasdichtung (35) als Dichtgas für die Trockengasdichtung (35);
Abgeben von Stickstoff von einer Stickstoffquelle (15) an die mindestens eine Trockengasdichtung (35) als Trenngas für die Trockengasdichtung (35);
Sammeln einer gasförmigen Mischung, die von der mindestens einen Trockengasdichtung (35) entlüftet wird, wobei die gasförmige Mischung Wasserstoff und Stickstoff enthält; und
Abgeben komprimierten Wasserstoffs von der Wasserstoffkompressionseinheit (2), von Stickstoff von der Stickstoffquelle (15) und der entlüfteten gasförmigen Mischung an die Ammoniaksyntheseeinheit (5) und Synthetisieren von Ammoniak daraus.

10. Verfahren nach Anspruch 9, ferner umfassend den Schritt des Erhöhens von Druck von Gas, das von der Entlüftung (45, 47) der mindestens einen Trockengasdichtung (35) entlüftet wird, auf einen Gasansaugdruck der Ammoniaksyntheseeinheit (5).

11. Verfahren nach Anspruch 9 oder 10, wobei Stickstoff mit Wasserstoff in der Wasserstoffkompressionseinheit (2) derart gemischt wird, dass ein Gemisch von Wasserstoff und Stickstoff durch die Wasserstoffkompressionseinheit (2) verarbeitet wird.

12. Verfahren nach Anspruch 9 oder 10 oder 11, ferner umfassend den Schritt des Produzierens von Wasserstoff mit einem Elektrolyseur (21).

13. Verfahren nach Anspruch 12, ferner umfassend die folgenden Schritte:
Umwandeln von Leistung von einer erneuerbaren Energieressource in elektrische Leistung;
Speisen des Elektrolyseurs (21) mit der elektrischen Leistung.

14. Verfahren nach einem oder mehreren der Ansprüche 9 bis 13, ferner umfassend den Schritt des Trennens von Stickstoff aus Luft.

15. Verfahren nach Anspruch 14, ferner umfassend den Schritt des Komprimierens von Wasserstoff, der von der Wasserstoffkompressionseinheit (2) abgegeben wird, entlüftetem gasförmigem Gemisch von der Entlüftung (45, 47) der mindestens einen Trockengasdichtung (35) und Stickstoff von einer Stickstoffquelle (15) in einem Synthesegaskompressor (11) der Ammoniaksyntheseeinheit (5).

## Revendications

1. Système (1) destiné à la production d'ammoniac, le système comprenant :
une source d'hydrogène (19) ;
une source d'azote (15) ;
une unité de compression d'hydrogène (2) comprenant : un côté aspiration (3.1) accouplé fluidiquement à la source d'hydrogène (19), un côté délivrance (3.2), et au moins un compresseur (3 ; 3A, 3B, 3C) ; dans lequel l'au moins un compresseur (3 ; 3A, 3B, 3C) comprend : un carter (3.3), un arbre rotatif (3.4) logé pour rotation dans le carter (3.3), et au moins un joint d'étanchéité à gaz sec (35) entourant de manière étanche l'arbre rotatif (3.4) ;
une unité de synthèse d'ammoniac (5) accouplée fluidiquement à l'unité de compression d'hydrogène (2) et à la source d'azote (19) ;
une ligne d'alimentation en gaz d'étanchéité (37) conçue pour délivrer de l'hydrogène comprimé à l'au moins un joint d'étanchéité à gaz sec (35) ; et
une ligne d'alimentation en gaz de séparation (20) conçue pour délivrer de l'azote à l'au moins un joint d'étanchéité à gaz sec (35) ;
dans lequel l'unité de synthèse d'ammoniac (5) est accouplée fluidiquement à un échappement (45, 47) de l'au moins un joint d'étanchéité à gaz sec (35), et conçue pour recevoir et traiter de l'hydrogène comprimé provenant de l'unité de compression d'hydrogène (2), de l'azote provenant de la source d'azote (15) et du gaz s'échappant de l'au moins un joint d'étanchéité à gaz sec (35).

2. Système (1) selon la revendication 1, dans lequel ledit échappement comprend un échappement primaire (45) et un échappement secondaire (47), l'échappement primaire (45) et l'échappement secondaire (47) étant accouplés fluidiquement à l'unité de synthèse d'ammoniac (5).

3. Système (1) selon la revendication 1 ou 2, dans lequel la source d'hydrogène (19) comprend un électrolyseur (21).

4. Système (1) selon la revendication 3, comprenant en outre une unité de conversion de puissance (23), conçue pour convertir de la puissance provenant d'une ressource énergétique renouvelable en puissance électrique, et dans lequel l'électrolyseur (21) est alimenté en puissance par l'unité de conversion de puissance (23).

5. Système (1) selon une ou plusieurs des revendications précédentes, dans lequel la source d'azote (15) comprend une installation de séparation d'azote conçue pour séparer l'azote de l'air.

6. Système (1) selon une ou plusieurs des revendications précédentes, dans lequel l'unité de synthèse d'ammoniac (5) comprend un compresseur de gaz de synthèse (11) accouplé fluidiquement au côté délivrance (3.2) de l'unité de compression d'hydrogène (2), à la source d'azote (15) et à l'échappement (45, 47) de l'au moins un joint d'étanchéité à gaz sec (35) ; et dans lequel le compresseur de gaz de synthèse (11) est conçu pour comprimer une combinaison gazeuse contenant de l'azote et de l'hydrogène.

7. Système (1) selon une ou plusieurs des revendications précédentes, comprenant en outre une unité d'amplification de pression (53) conçue pour amplifier la pression d'un gaz s'échappant de l'échappement (45, 47) de l'au moins un joint d'étanchéité à gaz sec (35) à une pression d'entrée de gaz de l'unité de synthèse d'ammoniac (5).

8. Système (1) selon la revendication 7, dans lequel l'unité d'amplification de pression (53) est conçue pour amplifier la pression d'un gaz s'échappant de l'échappement (45, 47) de l'au moins un joint d'étanchéité à gaz sec (35) à une pression de délivrance de l'unité de compression d'hydrogène (2).

9. Procédé permettant de produire de l'ammoniac, le procédé comprenant :
la compression d'hydrogène dans une unité de compression d'hydrogène (2), l'unité de compression d'hydrogène (2) comprenant : un côté aspiration (3.1) accouplé fluidiquement à une source d'hydrogène (19), un côté délivrance accouplé fluidiquement à une unité de synthèse d'ammoniac (5), et au moins un compresseur (3 ; 3A, 3B, 3C) ; dans lequel le compresseur comprend : un carter (3.3), un arbre rotatif (3.4) logé pour rotation dans le carter (3.3), et au moins un joint d'étanchéité à gaz sec (35) entourant de manière étanche l'arbre rotatif (3.4) ;
la délivrance d'hydrogène comprimé à l'au moins un joint d'étanchéité à gaz sec (35) en tant que gaz d'étanchéité pour le joint d'étanchéité à gaz sec (35) ;
la délivrance d'azote à partir d'une source d'azote (15) vers l'au moins un joint d'étanchéité à gaz sec (35) en tant que gaz de séparation pour le joint d'étanchéité à gaz sec (35) ;
la collecte d'un mélange gazeux s'échappant de l'au moins un joint d'étanchéité à gaz sec (35), le mélange gazeux contenant de l'hydrogène et de l'azote ; et
la délivrance d'hydrogène comprimé à partir de l'unité de compression d'hydrogène (2), d'azote à partir de la source d'azote (15), et du mélange gazeux s'échappant vers l'unité de synthèse d'ammoniac (5) et la synthèse d'ammoniac à partir de ceux-ci.

10. Procédé selon la revendication 9, comprenant en outre l'étape consistant à amplifier la pression du gaz s'échappant de l'échappement (45, 47) de l'au moins un joint d'étanchéité à gaz sec (35) à une pression d'entrée de gaz de l'unité de synthèse d'ammoniac (5).

11. Procédé selon la revendication 9 ou 10, dans lequel de l'azote est combiné à de l'hydrogène dans l'unité de compression d'hydrogène (2), de telle sorte qu'une combinaison d'hydrogène et d'azote est traitée à travers l'unité de compression d'hydrogène (2).

12. Procédé selon la revendication 9 ou 10 ou 11, comprenant en outre l'étape de production d'hydrogène avec un électrolyseur (21).

13. Procédé selon la revendication 12, comprenant en outre les étapes suivantes :
conversion de puissance provenant d'une ressource énergétique renouvelable en puissance électrique ;
alimentation en puissance de l'électrolyseur (21) avec ladite puissance électrique.

14. Procédé selon une ou plusieurs des revendications 9 à 13, comprenant en outre l'étape de séparation d'azote par rapport à de l'air.

15. Procédé selon la revendication 14, comprenant en outre l'étape de compression d'hydrogène délivré par l'unité de compression d'hydrogène (2), d'un mélange gazeux s'échappant de l'échappement (45, 47) de l'au moins un joint d'étanchéité à gaz sec (35) et d'azote provenant d'une source d'azote (15) dans un compresseur de gaz de synthèse (11) de l'unité de synthèse d'ammoniac (5).
